Europäisches Patentamt

European Patent Office

Office européen des brevets

(19)

(11) **EP 1 385 283 A1**

(12) **EUROPEAN PATENT APPLICATION**

(43) Date of publication:
**28.01.2004 Bulletin 2004/05**

(51) Int Cl.⁷: **H04B 13/00**

(21) Application number: **02016249.1**

(22) Date of filing: **22.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Culture Com. Technology (Macau) Ltd.
Macau (MO)**

(72) Inventor: **Shen, Te-Chang
Macau (MO)**

(74) Representative:
**Manitz, Finsterwald & Partner GbR
Postfach 31 02 20
80102 München (DE)**

(54) **Method of communication through a medium**

(57) A system and a method for communication via a medium are provided, whereby a mechanical wave representing a communication signal is generated by a mechanical-wave generating module at a signal-transmitting end, and transmitted via a medium (solid, liquid or gas) to a mechanical-wave detecting/receiving module at a signal-receiving end, so as to achieve unidirectional and two-way signal communication. The mechanical wave is detected and received by the mechanical-wave detecting/receiving module where frequency and waveform of the mechanical wave are read out to obtain the communication signal represented by the mechanical wave. Thereby, transmission of communication signals in the form of mechanical waves via the medium can be achieved.

# FIG. 1

EP 1 385 283 A1

**Description**

**FIELD OF THE INVENTION**

The present invention relates to communication systems and methods, and more particularly, to a system and method for communication via a medium, whereby communication signals can be transmitted via the medium from a transmitting end to a receiving end.

**BACKGROUND OF THE INVENTION**

Conventionally, communication signals are usually transmitted in the form of electromagnetic waves without having to use any medium.

With rapid development in electromagnetic communication systems, e.g. AM (amplitude modulation), FM (frequency modulation), wireless high-frequency communication, wireless telecommunication, satellite communication and military communication, thus remaining-available electromagnetic spectra or channels can barely cover the present usage need. Therefore, users are not allowed to freely use any electromagnetic frequency for communication purpose, but rather have to compete for authorized access to a particular communication electromagnetic channel. In fact, such access acquisition would cost a huge amount of money; for example, among sixty licenses for third-generation (3G) mobile phones globally issued nowadays, those in United Kingdom and Germany are auctioned at an incredibly high price of more than one trillion NT dollars. And, the 3G mobile phone licenses in Taiwan are also estimated to be worth at least more than ten billion NT dollars.

In response to the above drawbacks in conventional electromagnetic communication, such as shortage of electromagnetic frequencies for communication purpose, and high costs for obtaining access to communication channels, it is therefore desirable to provide another communication system and method for allowing free-frequency performance of communication.

**SUMMARY OF THE INVENTION**

An objective of the present invention is to provide a system and a method for communication via a medium, whereby communication signals are transmitted in the form of mechanical waves at any frequency from a transmitting end to a receiving end, so as to achieve unidirectional or two-way signal communication.

A further objective of the present invention is to provide a system and a method for communication via a medium, whereby communication signals are transmitted via transverse and/or longitudinal mechanical waves through a gas, liquid or solid medium, so as to perform unidirectional or two-way communication between a transmitting end and a receiving end.

In accordance with the above and other objectives, the present invention provides a system and method for communication via a medium, whereby mechanical waves of any frequency are transmitted via media, so as to allow mechanical waves representing communication signals to be transmitted from a signal-transmitting end to a signal-receiving end and to thereby achieve unidirectional and two-way signal communication.

A mechanical-wave generating module located at the signal-transmitting end generates a transverse mechanical wave, a longitudinal mechanical wave, or a combination thereof according to a user's request, allowing the mechanical wave to be transmitted via a gas medium, liquid medium or solid medium to a mechanical-wave detecting/receiving module located at the signal-receiving end. The mechanical-wave detecting/receiving module then detects and receives the mechanical wave, so as to read out frequency and waveform of the mechanical wave and to obtain a communication signal represented by the mechanical wave. As a result, transmission of communication signals in the form of mechanical waves via the medium can be achieved.

The system and method for communication via a medium according to the invention provide significant advantages. First of all, a mechanical wave representing a communication signal can be generated with any frequency by the signal-transmitting end according to a user's request, and transmitted via a medium from the signal-transmitting end to the signal-receiving end, so as to achieve unidirectional or two-way signal communication. Further, by using gas, liquid and solid as media for wave/signal transmission, mechanical waves/communication signals can be transmitted easily and conveniently from the signal-transmitting end to the signal-receiving end, such that efficient signal communication can be achieved. Therefore, the user can freely use the mechanical wave of any frequency for communication purpose through the use of the system and method for communication via a medium according to the invention, and drawbacks of limited-frequency electromagnetic channels and high costs for obtaining license or access to the electromagnetic channels in the prior art can be eliminated.

## BRIEF DESCRIPTION OF THE DRAWINGS

The present invention can be more fully understood by reading the following detailed description of the preferred embodiments, with reference made to the accompanying drawings, wherein:

FIG. 1 is a block diagram showing architecture of a system for communication via a medium according to the invention;

FIG. 2 is a block diagram showing operation of the system for communication via a medium according to one embodiment of the invention;

FIG. 3 is a schematic diagram showing a transverse mechanical wave transmitted in a medium used in the system for communication via a medium of FIG. 2;

FIG. 4 is a correlation diagram of amplitude versus time for a transverse mechanical wave transmitted through the use of the system for communication via a medium of FIG. 2;

FIG. 5 is a block diagram showing operation of the system for communication via a medium according to another embodiment of the invention;

FIG. 6 is a schematic diagram showing a longitudinal mechanical wave transmitted in a medium used in the system for communication via a medium of FIG. 5;

FIG. 7 is a correlation diagram of amplitude versus time for a longitudinal mechanical wave transmitted through the use of the system for communication via a medium of FIG. 5;

FIG. 8 is a block diagram showing operation of the system for communication via a medium according to a further embodiment of the invention;

FIG. 9 is a correlation diagram of amplitude versus time for a mechanical wave transmitted in a stratum medium through the use of the system for communication via a medium of FIG. 8;

FIG. 10 is a schematic diagram showing waveform of a surface mechanical wave transmitted through the use of the system for communication via a medium of FIG. 8;

FIG. 11 is a block diagram showing operation of the system for communication via a medium according to a further embodiment of the invention;

FIG. 12 is a block diagram showing operation of the system for communication via a medium according to a further embodiment of the invention;

FIG. 13 is a flowchart of a method for communication via a medium through the use of the system for communication via a medium of FIG. 1;

FIG. 14 is a flowchart of a method for communication via a medium through the use of the system for communication via a medium of FIG. 2;

FIG. 15 is a flowchart of a method for communication via a medium through the use of the system for communication via a medium of FIG. 5;

FIG. 16 is a flowchart of a method for communication via a medium through the use of the system for communication via a medium of FIG. 8;

FIG. 17 is a flowchart showing the steps for reading waveform of a mechanical wave in the method for communication via a medium of FIG. 16;

FIG. 18 is a flowchart of a method for communication via a medium through the use of the system for communication via a medium of FIG. 11; and

FIG. 19 is a flowchart of a method for communication via a medium through the use of the system for communication via a medium of FIG. 12.

## DETAILED DESCRIPTION OF THE PREFERRED EMBODIMENTS

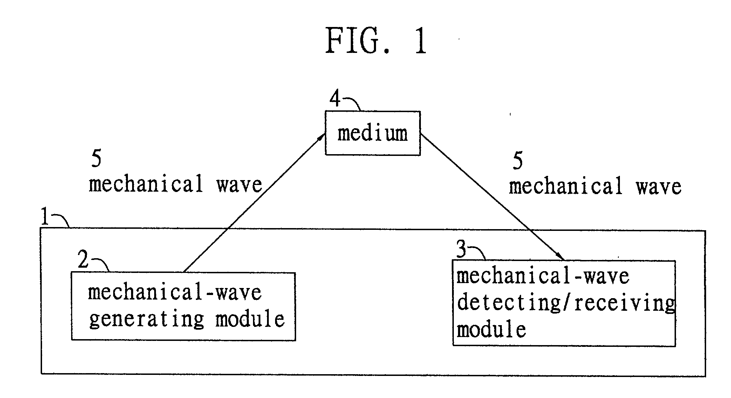

FIG. 1 illustrates architecture of a system for communication via a medium according to the present invention. As shown in FIG. 1, the communication system 1 comprises a mechanical-wave generating module 2 located at a signal-transmitting end, and a mechanical-wave detecting/receiving module 3 located at a signal-receiving end. The mechanical-wave generating module 2 may generate a mechanical wave 5 in response to a user's request, wherein the mechanical wave 5 can be a transverse mechanical wave, a longitudinal mechanical wave, or a combination of transverse and longitudinal mechanical waves. The mechanical wave 5 generated by the mechanical-wave generating module 2 is transmitted via a medium 4 to the mechanical-wave detecting/receiving module 3; preferably, the medium is a deformable or elastic medium of gas, liquid or solid. The medium 4 does not move along with the mechanical wave 5, but portions of the medium 4 vibrate only within a certain range of path; thus, energy of the mechanical wave 5 is transferred from one portion of the medium 4 to the next without concerning any long distance movement of the medium 4 per se. Therefore, the mechanical wave 5 operates to disturb the medium 4 for energy transmission without involving in the movement of the entire medium 4. The mechanical-wave detecting/receiving module 3 located at the signal-receiving end is used to detect and receive the mechanical wave 5, so as to read out frequency and waveform of the mechanical wave 5 and to obtain a communication signal represented by the mechanical wave 5.

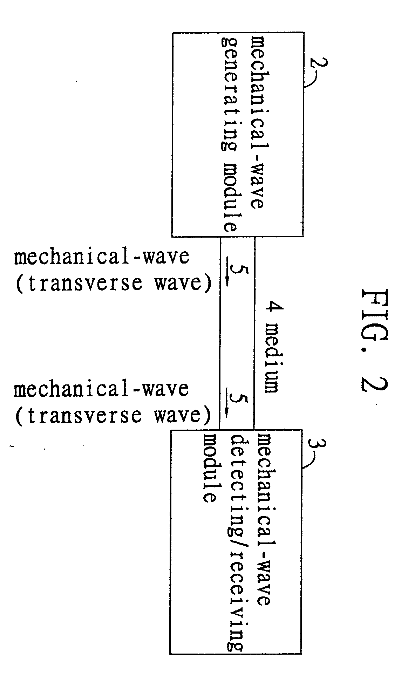

FIG. 2 illustrates operation of the system 1 for communication via a medium according to one embodiment of the invention. As shown in FIG. 2, the medium 4 is a solid medium, such as a steel strip. The mechanical-wave generating module 2, located at the signal-transmitting end, of the communication system 1 generates a mechanical wave 5 as requested by a user, and the mechanical wave 5 is adapted to be transmitted via the medium 4 (i.e. the steel strip) to the mechanical-wave detecting/receiving module 3 located at the signal-receiving end, wherein the mechanical wave 5 is a transverse mechanical wave.

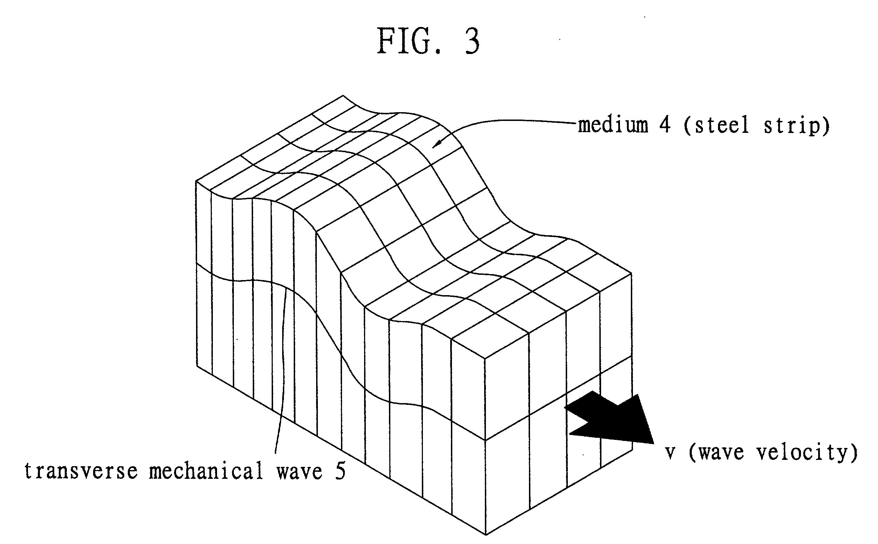

As shown in FIG. 3, during transmission of the transverse mechanical wave 5 through the solid medium 4, deformation of the medium 4 is shear strain, restoring force of the medium 4 is shear stress, coefficient of elasticity of the medium 4 is shear modulus G, and mass density $\rho$ of the medium 4 is a constant. Therefore, a wave velocity $\nu$ of the transverse mechanical wave 5 in the solid medium 4 is represented by a formula below:

$$\nu = \surd(G/\rho)$$

wherein for the medium 4 of the steel strip, mass density $\rho$ is $7.8310 \times 10^3$ kg/m$^3$ and shear modulus G is $8.3 \times 10^{10}$ Pa; the wave velocity $\nu$ of the transverse mechanical wave 5 in steel is:

$$\nu = \surd[(8.3 \times 10^{10} \text{ Pa}) /(7.8310 \times 10^3 \text{ kg/m}^3)] = 3000 \text{ m/sec.}$$

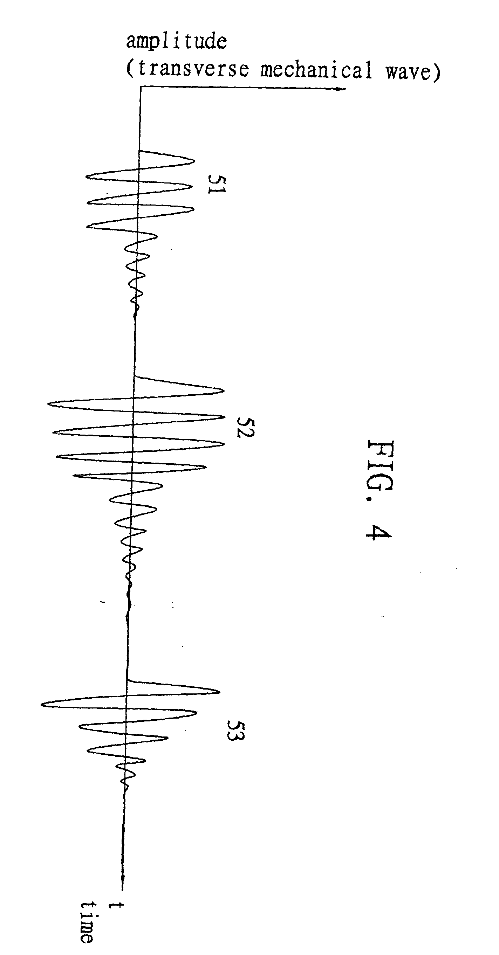

With provision of the wave velocity $\nu$ of the transverse mechanical wave 5 in the medium 4, wavelength $\lambda$ and frequency f of the transverse mechanical wave 5 can also be obtained by $\nu = \lambda \times f$. The transverse mechanical wave 5 transmitted via the medium 4 (i.e. the steel strip) is then detected and received by the mechanical-wave detecting/receiving module 3, located at the signal-receiving end, where frequency and waveform of the transverse mechanical wave 5 are read out to obtain signals 51, 52, 53 represented by the transverse mechanical wave 5, as shown in FIG. 4.

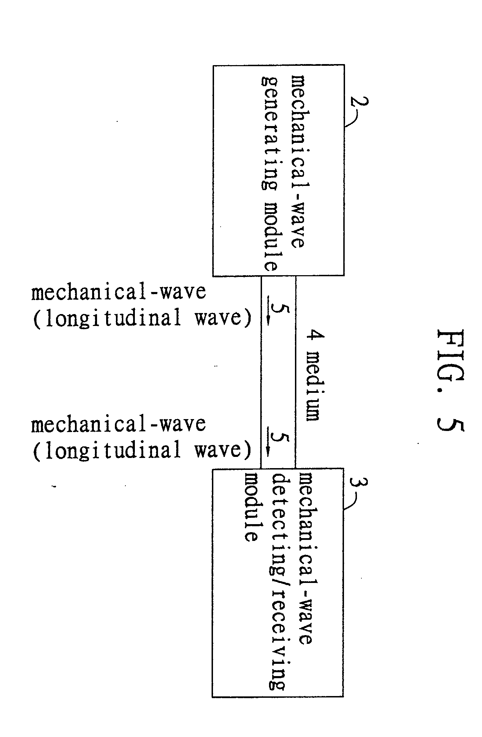

FIG. 5 illustrates operation of the system for communication via a medium according to another embodiment of the invention. As shown in FIG. 5, the medium 4 is a solid medium such as a granite strip. The mechanical-wave generating module 2, located at the signal-transmitting end, of the communication system 1 generates a mechanical wave 5 as requested by a user, and the mechanical wave 5 is adapted to be transmitted via the medium 4 (i.e. the granite strip) to the mechanical-wave detecting/receiving module 3 located at the signal-receiving end, wherein the mechanical wave 5 is a longitudinal mechanical wave.

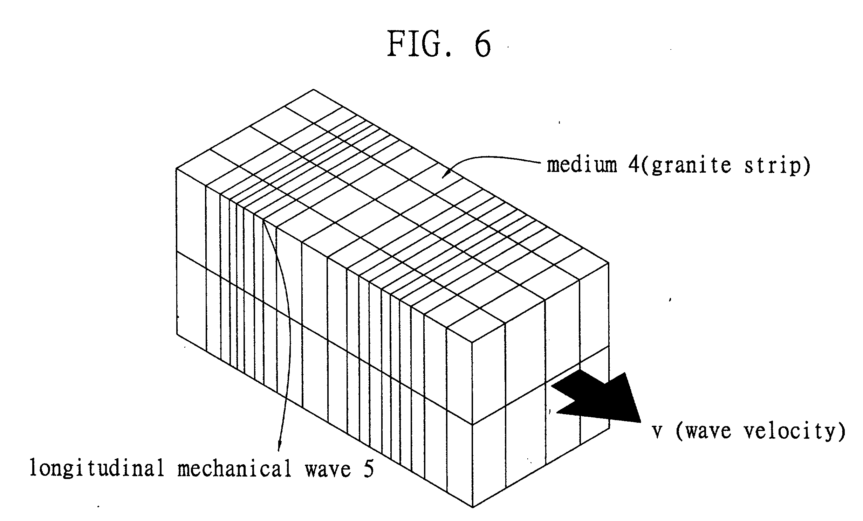

As shown in FIG. 6, when the longitudinal mechanical wave 5 is transmitted through the solid medium 4, deformation of the medium 4 is tensile strain, restoring force of the medium 4 is tensile stress, coefficient of tensile elasticity of the medium 4 is Young's modulus Y, and mass density $\rho$ of the medium 4 is a constant. Therefore, a wave velocity $\nu$ of the longitudinal mechanical wave 5 in the solid medium 4 is represented by a formula below:

$$\nu = \surd(Y/\rho)$$

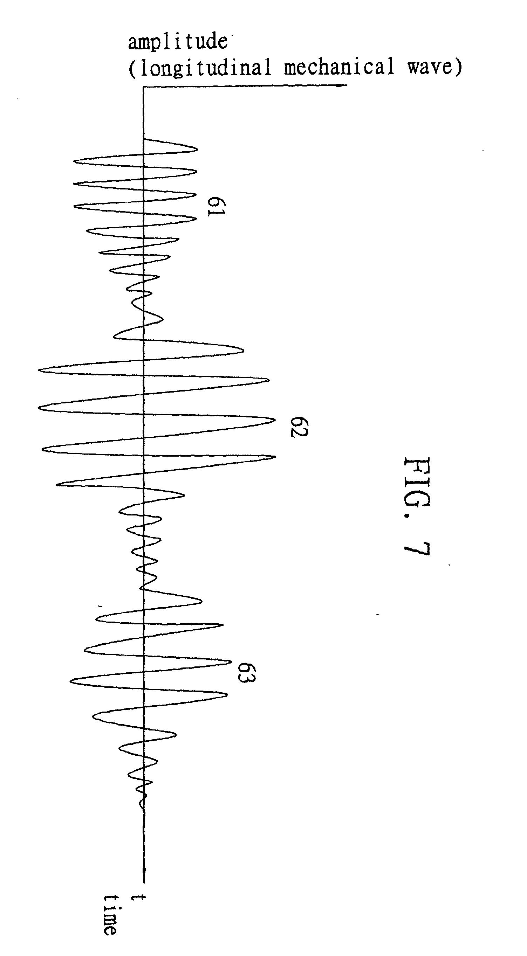

wherein when Young's module Y and mass density $\rho$ are known, the wave velocity $\nu$ of the longitudinal mechanical wave 5, as well as wavelength $\lambda$ and frequency f thereof can be obtained ($\nu = \lambda$ f); in this embodiment, for the medum of the granite strip, so the wave velocity $\nu$ of the longitudinal mechanical wave 5 is calculated to be 6000 m/sec. The longitudinal mechanical wave 5 transmitted via the medium 4 (i.e. the granite strip) is then detected and received by the mechanical-wave detecting/receiving module 3, located at the signal-receiving end, where frequency and waveform of the longitudinal mechanical wave 5 are read out to obtain signals 61, 62, 63 represented by the longitudinal mechanical wave 5, as shown in FIG. 7.

In general, as the medium 4 is solid, Young's module Y of a solid medium is larger than shear modulus G thereof; therefore, a longitudinal mechanical wave would have a greater wave velocity in the solid medium than a transverse mechanical wave. If the medium 4 is liquid, a liquid medium would not be induced with restoring force by shear strain, and thus a transverse mechanical wave cannot be transmitted through the liquid medium; that is, the liquid medium is only applicable for transmission of a longitudinal mechanical wave such as pressure wave.

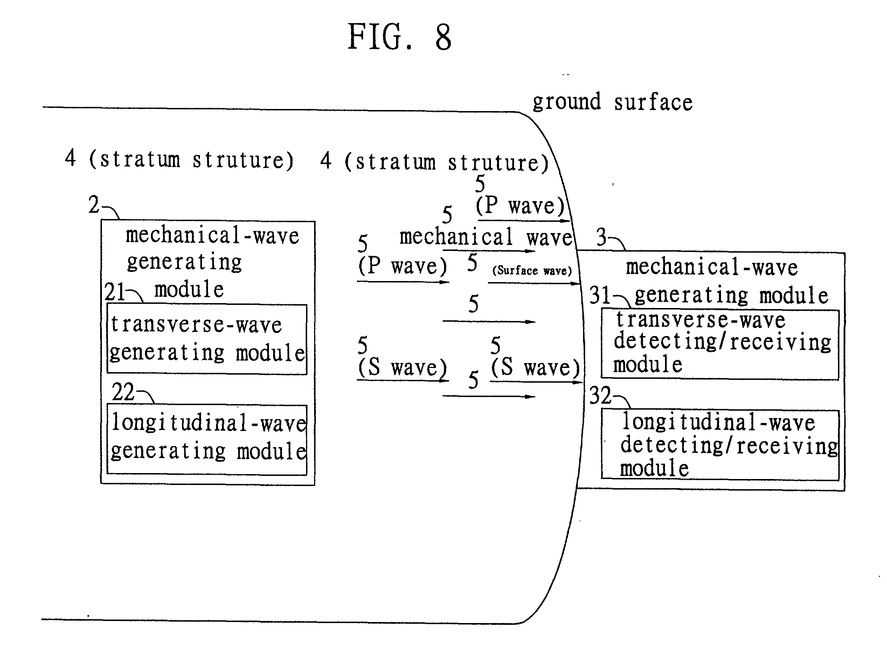

FIG. 8 illustrates operation of the system for communication via a medium according to a further embodiment of the invention. As shown in FIG. 8, the medium 4 is a stratum structure. The mechanical-wave generating module 2, located at the signal-transmitting end, of the communication system 1 generates a mechanical wave 5 as requested by a user, and the mechanical wave 5 is adapted to be transmitted via the medium 4 (i.e. the stratum structure) to the mechanical-wave detecting/receiving module 3 located at the signal-receiving end, wherein the mechanical wave 5 may be a transverse mechanical wave, a longitudinal mechanical wave, or a combination of transverse and longitudinal mechanical waves.

A transverse mechanical wave, or a secondary wave (S wave), has a wave velocity $v$ up to 4-5 km/sec. As the S wave is transmitted in the medium 4, particles of the medium 4 move in a direction perpendicular to that of wave transmission in a manner that, particles of the medium 4 vibrate up and down for transmitting the S wave in a transverse direction with respect to particle motion of the medium 4. Generally, the S wave cannot travel in gas and liquid; therefore, if the stratum medium 4 partly contains gas or liquid, the gas or liquid part does not mediate transmission of the S wave.

A longitudinal mechanical wave, or primary wave (P wave), has a wave velocity $v$ up to 7-8 km/sec, which is greater than that of the S wave. As the P wave is transmitted in the medium 4, particles of the medium 4 move in a direction parallel to that of wave transmission, wherein back and forth motion of particles of the medium 4 produces compressive and tensile deformation for transmitting the P wave in a direction parallel to particle motion of the medium 4, similar in situation to a sound wave. Generally, the P wave can travel in solid and liquid, and part of energy thereof would transform into a sound wave when the P wave is transmitted to a surface portion of the stratum medium 4.

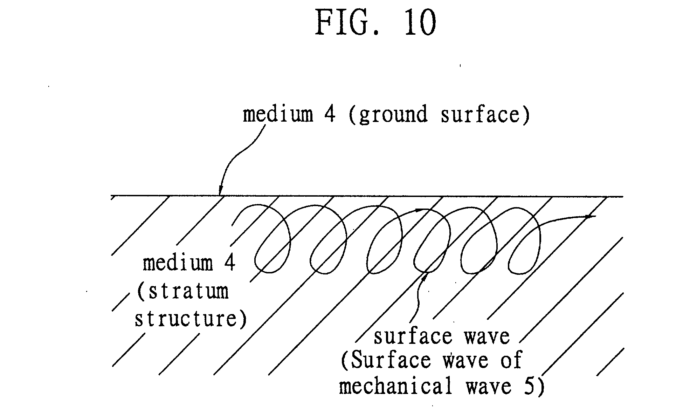

Furthermore, the P wave and S wave transmitted in the medium 4 can interact to produce a surface wave that only travels in the surface portion of the stratum medium 4, as shown in FIG. 10. The surface wave comprises two types of motion; one is left-and-right vibration only, and the other one is up-and-down vibration with an elliptic moving track, wherein the left-and-right vibration progresses faster than the up-and-down vibration.

As the mechanical-wave generating module 2 located at the signal-transmitting end generates the mechanical wave 5, such as S wave (transverse mechanical wave), P wave (longitudinal mechanical wave), and surface wave (produced by interaction of S wave and P wave), the mechanical wave 5 is transmitted via the stratum medium 4 to the mechanical-wave detecting/receiving module 3 located at the signal-receiving end. In this embodiment, the mechanical-wave generating module 2 comprises a transverse-wave generating module 21 for producing a transverse mechanical wave (S wave), and a longitudinal-wave generating module 22 for producing a longitudinal mechanical wave (P wave). The mechanical-wave detecting/receiving module 3 comprises a transverse-wave detecting/receiving module 31 for detecting and receiving a transverse mechanical wave (S wave), and a longitudinal-wave detecting/receiving module 32 for detecting and receiving a longitudinal mechanical wave (P wave). The transverse-wave generating module 21 is used to generate a transverse S wave, and transmit the S wave and a surface wave produced by interaction of S wave and P wave to the mechanical-wave detecting/receiving module 3 via the stratum medium 4. And, the longitudinal-wave generating module 22 is used to generate a longitudinal P wave, and transmit the P wave and the surface wave produced by interaction of S wave and P wave to the mechanical-wave detecting/receiving module 3 via the stratum medium 4. In response, the transverse-wave detecting/receiving module 31 detects and receives transverse-wave part of the mechanical wave 5 and filters out noise thereof, and the longitudinal-wave detecting/receiving module 32 detects and receives longitudinal-wave part of the mechanical wave 5 and filters out noise thereof; in this embodiment, the mechanical wave 5 arriving at the mechanical-wave detecting/receiving module 3 includes S wave, P wave and surface wave.

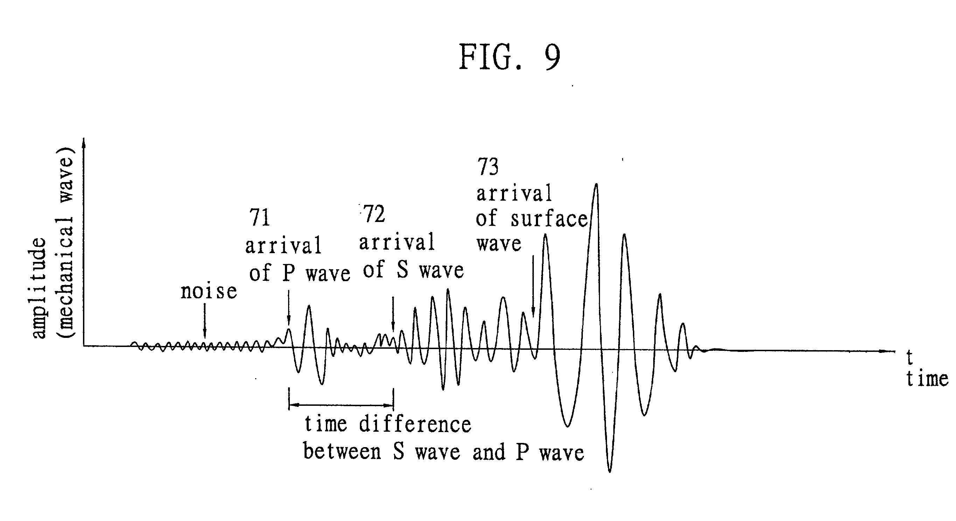

FIG. 9 is a correlation diagram of amplitude versus time for a mechanical wave transmitted in a stratum medium through the use of the system for communication via a medium of FIG. 8. As shown in FIG. 9, the mechanical wave 5 comprises noise, P wave 71, S wave 72 and surface wave 73, wherein the P wave 71, S wave 72 and surface wave 73 would be processed by the mechanical-wave detecting/receiving module 3 with the noise being eliminated.

As the mechanical wave 5 generated by the mechanical-wave generating module 2, including S wave 72 (transverse mechanical wave), P wave 71 (longitudinal mechanical wave) and surface wave 73 (produced by interaction of S wave and P wave), is transmitted via the stratum medium 4 to the mechanical-wave detecting/receiving module 3, the first arrival is noise that is filtered out by the mechanical-wave detecting/receiving module 3. The next arrival is the longitudinal P wave 71 to be detected and received by the longitudinal-wave detecting/receiving module 32; then, the transverse S wave 72 arrives at the mechanical-wave detecting/receiving module 3, and is received by the transverse-wave detecting/receiving module 31; this is because the P wave 71 is greater in wave velocity than the S wave 72. Finally, the surface wave 73 arrives at the mechanical-wave detecting/receiving module 3, and detected and received by the transverse-wave and longitudinal-wave detecting/receiving modules 31, 32.

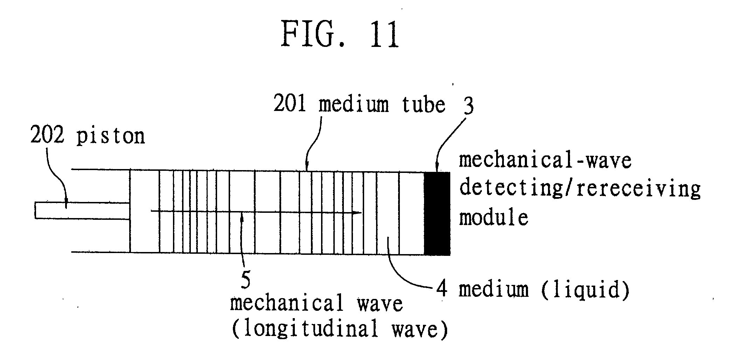

FIG. 11 illustrates operation of the system for communication via a medium according to a further embodiment of the invention. As shown in FIG. 11, the medium 4 is a liquid medium such as water. The mechanical-wave generating module 2, located at the signal-transmitting end of the communication system 1, comprises a medium tube 201 and a piston 202 disposed at one end of the medium tube 201. The medium tube 201 is filled with the compressible liquid medium 4 (i.e. water), allowing the piston 202 to be operated back and forth in a direction along the medium tube 201 to generate a mechanical wave 5. Since the medium 4 is liquid, only a longitudinal wave, but not a transverse wave, can be generated. The other end of the medium tube 201 is connected to the mechanical-wave detecting/receiving module 3, such that the longitudinal mechanical wave 5 generated from the piston 202 can be transmitted via the liquid medium 4 to the mechanical-wave detecting/receiving module 3 where the longitudinal mechanical wave 5 is detected and received.

When the longitudinal mechanical wave 5 is transmitted in the liquid medium 4 as described above, the wave velocity ν of the longitudinal mechanical wave 5 is represented by a formula below:

$$\nu = \sqrt{(B/\rho)}$$

wherein B is bulk modulus of elasticity for liquid and represents a ratio of liquid pressure change to volume change, and ρ is liquid mass density. For instance, the wave velocity ν of the longitudinal wave 5 is 1450 m/sec in water and 1522 m/sec in sea water.

As shown in FIG. 11, the liquid medium 4 is enclosed in the medium tube 201 of the communication system 1. For an open liquid medium 4, for example, if the mechanical-wave generating module 2 is placed in an open lake, it should be understood that, the longitudinal mechanical wave 5 generated by the mechanical-wave generating module 2 and transmitted via the liquid medium 4 (lake water) to the mechanical-wave detecting/receiving module 3, is similarly based on previous description with reference to FIG. 11, and thus not to be further detailed herein.

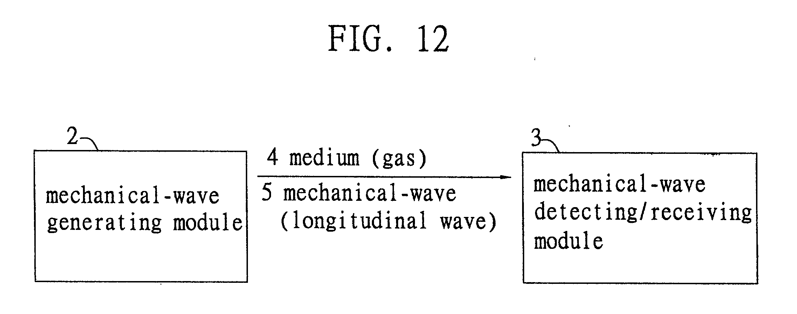

FIG. 12 illustrates operation of the system for communication via a medium according to a further embodiment of the invention. As shown in FIG. 12, the medium 4 is a gas medium such as air, hydrogen gas, oxygen gas and so on. The mechanical-wave generating module 2, located at the signal-transmitting end of the communication system 1, generates a mechanical wave 5 as requested by a user, and the generated mechanical wave 5 can only be a longitudinal wave due to the gas medium 4. The longitudinal mechanical wave 5 is transmitted via the gas medium 4 to the mechanical-wave detecting/receiving module 3 located at the signal-receiving end for detecting and receiving the mechanical wave 5.

When the longitudinal mechanical wave 5 is transmitted in the gas medium 4 as described above, the wave velocity ν of the mechanical wave 5 is represented by a formula below:

$$\nu = \sqrt{(\gamma P_0/\rho_0)}$$

wherein γ is a constant known as a specific heat ratio of gas, $P_0$ is gas pressure in an undisturbed condition, and $\rho_0$ is a constant known as gas mass density. For instance, the wave velocity ν of the longitudinal mechanical wave 5 is 331.3 m/sec in air, 1286 m/sec in hydrogen gas, and 317.2 m/sec in oxygen gas.

As shown in FIG. 12, the gas medium 4 is not enclosed in the communication system 1. For an closed gas medium 4, for example if the mechanical-wave generating module 2 is placed in a tube filled with the gas medium 4 (e.g. air), the longitudinal mechanical wave 5 generated by the mechanical-wave generating module 2 and transmitted via the gas medium 4 (air) to the mechanical-wave detecting/receiving module 3, is similarly based on previous description with reference to FIG. 12, and thus not to be further detailed herein.

Moreover, once the wave velocity ν of the longitudinal mechanical wave 5 transmitted in the liquid or gas medium 4 is known, wavelength λ and frequency f of the mechanical wave 5 can be obtained by an equation of ν = λ x f. This allows the user to desirably and freely utilize longitudinal mechanical waves for mediating communication signals with the provision of wave velocities of the signals.

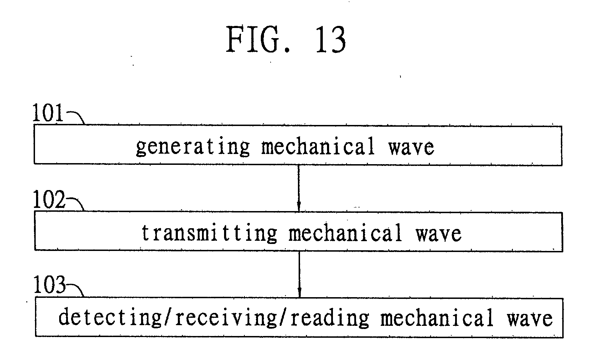

FIG. 13 is a flowchart of a method for communication via a medium through the use of the system for communication via a medium of FIG. 1. As shown in FIG. 13, first in step 101, the mechanical-wave generating module 2 located at a signal-transmitting end generates a mechanical wave 5 as requested by a user, wherein the mechanical wave 5 may be a transverse mechanical wave, a longitudinal mechanical wave, or a combination of transverse and longitudinal mechanical waves. Then, it proceeds to step 102.

In step 102, the mechanical wave 5 (a transverse mechanical wave, a longitudinal mechanical wave, or a combination of transverse and longitudinal mechanical waves) generated by the mechanical-wave generating module 2, is transmitted via a medium 4 to the mechanical-wave detecting/receiving module 3 located at a signal-receiving end. The medium 4 may be a deformable or elastic medium such as a gas, liquid or solid medium. Then, it proceeds to step 103.

In step 103, the mechanical-wave detecting/receiving module 3 detects and receives the mechanical wave 5, so as to read out frequency and waveform of the mechanical wave 5 and to obtain a communication signal represented by the mechanical wave 5.

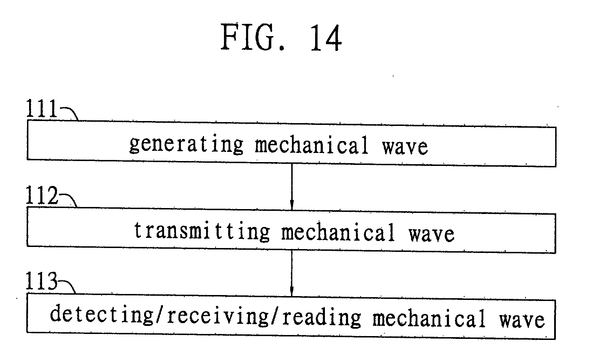

FIG. 14 is a flowchart of a method for communication via a medium through the use of the system for communication via a medium of FIG. 2. As shown in FIG. 14, first in step 111, the mechanical-wave generating module 2 located at a signal-transmitting end generates a mechanical wave 5 as requested by a user, wherein the mechanical wave 5 is a transverse mechanical wave. Then, it proceeds to step 112.

In step 112, the transverse mechanical wave 5 generated by the mechanical-wave generating module 2, is transmitted via a solid medium 4 (e.g. a steel strip) to the mechanical-wave detecting/receiving module 3 located at a signal-receiving end. Then, it proceeds to step 113.

In step 113, the mechanical-wave detecting/receiving module 3 detects and receives the transverse mechanical wave 5, so as to read out frequency and waveform of the transverse mechanical wave 5 and to obtain a communication signal represented by the transverse mechanical wave 5.

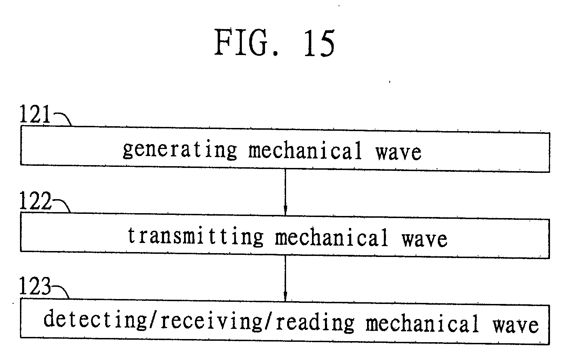

FIG. 15 is a flowchart of a method for communication via a medium through the use of the system for communication via a medium of FIG. 5. As shown in FIG. 15, first in step 121, the mechanical-wave generating module 2 located at a signal-transmitting end generates a mechanical wave 5 as requested by a user, wherein the mechanical wave 5 is a longitudinal mechanical wave. Then, it proceeds to step 122.

In step 122, the longitudinal mechanical wave 5 generated by the mechanical-wave generating module 2, is transmitted via a solid medium 4 (e.g. a granite strip) to the mechanical-wave detecting/receiving module 3 at a signal-receiving end. Then, it proceeds to step 123.

In step 123, the mechanical-wave detecting/receiving module 3 detects and receives the longitudinal mechanical wave 5, so as to read out frequency and waveform of the longitudinal mechanical wave 5 and to obtain a communication signal represented by the longitudinal mechanical wave 5.

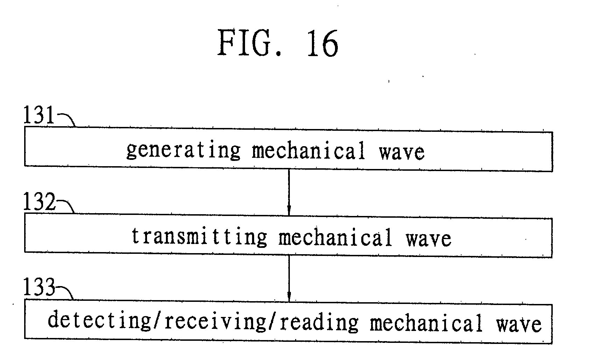

FIG. 16 is a flowchart of a method for communication via a medium through the use of the system for communication via a medium of FIG. 8. As shown in FIG. 16, first in step 131, the mechanical-wave generating module 2 located at a signal-transmitting end generates a mechanical wave 5 as requested by a user, wherein the mechanical wave 5 may be a transverse mechanical wave, a longitudinal mechanical wave, or a combination of transverse and longitudinal mechanical waves. Then, it proceeds to step 132.

In step 132, the mechanical wave 5 generated by the mechanical-wave generating module 2, is transmitted via a stratum medium 4 to the mechanical-wave detecting/receiving module 3 at a signal-receiving end. Then, it proceeds to step 133.

In step 133, the mechanical-wave detecting/receiving module 3 detects and receives the mechanical wave 5, so as to read out frequency and waveform of the mechanical wave 5 and to obtain a communication signal represented by the mechanical wave 5.

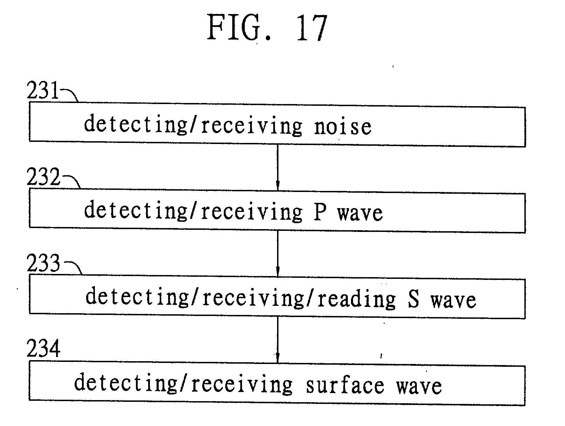

FIG. 17 is a flowchart showing the steps for reading waveform of a mechanical wave in the method for communication via a medium of FIG. 16. As shown in FIG. 17, first in step 231, when the mechanical wave 5 is transmitted to the mechanical-wave detecting/receiving module 3 located at the signal-receiving end, the first arrival is noise that is filtered out by the mechanical-wave detecting/receiving module 3. Then, it proceeds to step 232.

In step 232, after arrival and elimination of the noise, a longitudinal P wave 71 arrives at the mechanical-wave detecting/receiving module 3, and is detected and received by the longitudinal-wave detecting/receiving module 32 of the mechanical-wave detecting/receiving module 3. Then, it proceeds to step 233.

In step 233, after arrival of the longitudinal P wave 71, a transverse S wave 72 arrives at the mechanical-wave detecting/receiving module 3, and is detected and received by the transverse-wave detecting/receiving module 31 of the mechanical-wave detecting/receiving module 3. Since the P wave 71 is greater in wave velocity than the S wave 72, the P wave 71 arrives at the mechanical-wave detecting/receiving module 3 earlier than the S wave 72. Then, it proceeds to step 234.

Finally, in step 234, after arrival of the S wave 72, a surface wave 73 produced by interaction of P wave 71 and S wave 72, arrives at the mechanical-wave detecting/receiving module 3, and is detected and received by the transverse-wave and longitudinal-wave detecting/receiving modules 31, 32. The transverse-wave detecting/receiving module 31 detects and receives transverse-wave part of the surface wave 73, and the longitudinal-wave detecting/receiving module 32 detects and receives longitudinal-wave part of the surface wave 73.

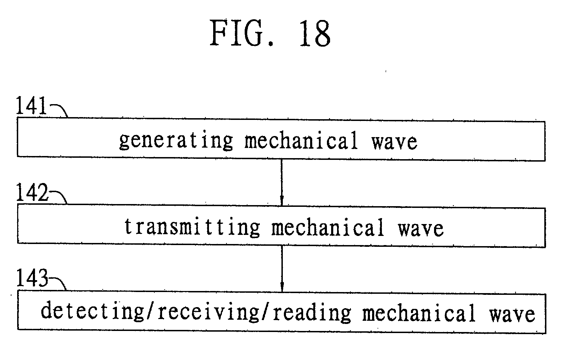

FIG. 18 is a flowchart of a method for communication via a medium through the use of the system for communication via a medium of FIG. 11. As shown in FIG. 18, first in step 141, the mechanical-wave generating module 2 located at a signal-transmitting end generates a mechanical wave 5 as requested by a user, wherein the mechanical wave 5 is a longitudinal mechanical wave. Then, it proceeds to step 142.

In step 142, the longitudinal mechanical wave 5 generated by the mechanical-wave generating module 2, is transmitted via a liquid medium 4 to the mechanical-wave detecting/receiving module 3 at a signal-receiving end, wherein the liquid medium 4 is water and so on. Then, it proceeds to step 143.

In step 143, the mechanical-wave detecting/receiving module 3 detects and receives the longitudinal mechanical wave 5, so as to read out frequency and waveform of the longitudinal mechanical wave 5 and to obtain a communication signal represented by the longitudinal mechanical wave 5.

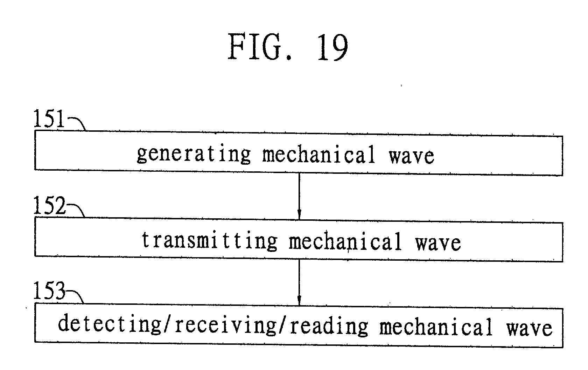

FIG. 19 is a flowchart of a method for communication via a medium through the use of the system for communication via a medium of FIG. 12. As shown in FIG. 19, first in step 151, the mechanical-wave generating module 2 located at a signal-transmitting end generates a mechanical wave 5 as requested by a user, wherein the mechanical wave 5 is a longitudinal mechanical wave. Then, it proceeds to step 152.

In step 152, the longitudinal mechanical wave 5 generated by the mechanical-wave generating module 2, is transmitted via a gas medium 4 to the mechanical-wave detecting/receiving module 3 at a signal-receiving end, wherein the gas medium 4 can air, hydrogen gas, oxygen gas and so on. Then, it proceeds to step 153.

In step 153, the mechanical-wave detecting/receiving module 3 detects and receives the longitudinal mechanical wave 5, so as to read out frequency and waveform of the longitudinal mechanical wave 5 and to obtain a communication signal represented by the longitudinal mechanical wave 5.

In conclusion from the above embodiments, the present invention provides a system and a method for communication via a medium. A mechanical-wave generating module located at a signal-transmitting end generates a transverse mechanical wave, a longitudinal mechanical wave, or a combination thereof according to a user's request, allowing the mechanical wave to be transmitted via a gas medium, liquid medium or solid medium to a mechanical-wave detecting/receiving module located at a signal-receiving end. The mechanical-wave detecting/receiving module then detects and receives the mechanical wave, so as to read out frequency and waveform of the mechanical wave and to obtain a communication signal represented by the mechanical wave. As a result, transmission of communication signals in the form of mechanical waves via the medium can be achieved.

The system and method for communication via a medium according to the invention provide significant advantages. First of all, a mechanical wave representing a communication signal can be generated with any frequency by the signal-transmitting end according to a user's request, and transmitted via a medium from the signal-transmitting end to the signal-receiving end, so as to achieve unidirectional or two-way signal communication. Further, by using gas, liquid and solid as media for wave/signal transmission, mechanical waves/communication signals can be transmitted easily and conveniently from the signal-transmitting end to the signal-receiving end, such that efficient signal communication can be achieved. Therefore, the user can freely use the mechanical wave of any frequency for communication purpose through the use of the system and method for communication via a medium according to the invention, and drawbacks of limited-frequency electromagnetic channels and high costs for obtaining license or access to the electromagnetic channels in the prior art can be eliminated.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A system for communication via a medium, allowing a mechanical wave to be transmitted via the medium for communication purpose, the system comprising:

   a mechanical-wave generating module, located at a signal-transmitting end for generating the mechanical wave and transmitting the mechanical wave via the medium to a signal-receiving end; and
   a mechanical-wave detecting/receiving module, located at the signal-receiving end for detecting and receiving the mechanical wave transmitted via the medium, and for reading frequency and waveform of the mechanical wave to obtain a communication signal represented by the mechanical wave.

2. The system according to claim 1, wherein the medium is selected from the group consisting of a solid, a liquid and a gas.

3. The system according to claim 2, wherein if the medium is a solid, the mechanical wave is selected from the group consisting of a longitudinal mechanical wave, a transverse mechanical wave, and a combination thereof.

4. The system according to claim 2, wherein if the medium is a liquid, the mechanical wave is a longitudinal mechanical wave.

5. The system according to claim 2, wherein if the medium is a gas, the mechanical wave is a longitudinal mechanical wave.

6. The system according to claim 1, wherein the mechanical-wave generating module comprises:

   a medium tube filled with a compressible medium; and
   a piston located at one end of the medium tube for generating a longitudinal mechanical wave by back-and-forth movement of the piston in a direction with along the medium tube, wherein the other end of the medium tube is connected to the mechanical-wave detecting/receiving module, so as to allow the longitudinal mechanical wave generated from the piston to be transmitted via the compressible medium to the mechanical-wave detecting/receiving module where the longitudinal mechanical wave is detected and received.

7. The system according to clam 6, wherein the compressible medium is a liquid.

8. The system according to clam 6, wherein the compressible medium is a gas.

9. A system for communication via a medium, allowing a mechanical wave to be transmitted via a stratum medium for communication purpose, the system comprising:

a mechanical-wave generating module, located at a signal-transmitting end for generating the mechanical wave and transmitting the mechanical wave via the stratum medium to a signal-receiving end; and
a mechanical-wave detecting/receiving module, located at the signal-receiving end for detecting and receiving the mechanical wave transmitted via the stratum medium, and for reading frequency and waveform of the mechanical wave to obtain a communication signal represented by the mechanical wave.

10. The system according to claim 9, wherein the mechanical-wave generating module comprises:

a transverse-wave generating module for generating a transverse mechanical wave, allowing the transverse wave to be transmitted via the stratum medium to the mechanical-wave detecting/receiving module; and
a longitudinal-wave generating module for generating a longitudinal mechanical wave, allowing the longitudinal wave to be transmitted via the stratum medium to the mechanical-wave detecting/receiving module;

wherein the transverse and longitudinal mechanical waves interact to form a surface wave in a manner that, the surface wave is transmitted via a ground surface portion of the stratum medium to the mechanical-wave detecting/receiving module.

11. The system according to claim 10, wherein the mechanical-wave detecting/receiving module comprises:

a transverse-wave detecting/receiving module for detecting and receiving the transverse mechanical wave generated from the transverse-wave generating module and of the surface wave, so as to read frequency and waveform of the transverse mechanical wave and to obtain a communication signal represented by the transverse mechanical wave; and
a longitudinal-wave detecting/receiving module for detecting and receiving the longitudinal mechanical wave generated from the longitudinal-wave generating module and of the surface wave, so as to read frequency and waveform of the longitudinal mechanical wave and to obtain a communication signal represented by the longitudinal mechanical wave.

12. The system according to claim 10, wherein the surface wave is in motion selected from the group consisting of left-and-right vibration, up-and-down vibration with an elliptic moving track, and a combination thereof.

13. A method for communication via a medium, allowing a mechanical wave to be transmitted via the medium for communication purpose, the method comprising the steps of:

(1) generating a mechanical wave via a mechanical-wave generating module located at a signal-transmitting end, and transmitting the mechanical wave to a signal-receiving end via the medium; and
(2) detecting and receiving the mechanical wave generated from the mechanical-wave generating module via a mechanical-wave detecting/receiving module located at the signal-receiving end, and reading frequency and waveform of the mechanical wave to obtain a communication signal represented by the mechanical wave.

14. The method according to claim 13, wherein the medium is selected from the group consisting of a solid, a liquid and a gas.

15. The method according to claim 14, wherein if the medium is a solid, the mechanical wave is selected from the group consisting of a longitudinal mechanical wave, a transverse mechanical wave, and a combination thereof.

16. The method according to claim 14, wherein if the medium is a liquid, the mechanical wave is a longitudinal mechanical wave.

17. The method according to claim 14, wherein if the medium is a gas, the mechanical wave is a longitudinal mechanical wave.

18. The method according to claim 13, wherein the medium is a stratum, and the mechanical-wave generating module comprises:

a transverse-wave generating module for generating a transverse mechanical wave, allowing the transverse wave to be transmitted via the stratum medium to the mechanical-wave detecting/receiving module; and
a longitudinal-wave generating module for generating a longitudinal mechanical wave, allowing the longitudinal wave to be transmitted via the stratum medium to the mechanical-wave detecting/receiving module;

wherein the transverse and longitudinal mechanical waves interact to form a surface wave in a manner that, the surface wave is transmitted via a ground surface portion of the stratum medium to the mechanical-wave detecting/receiving module.

19. The method according to claim 18, wherein the mechanical-wave detecting/receiving module comprises:

a transverse-wave detecting/receiving module for detecting and receiving the transverse mechanical wave generated from the transverse-wave generating module and of the surface wave, so as to read frequency and waveform of the transverse mechanical wave and to obtain a communication signal represented by the transverse mechanical wave; and
a longitudinal-wave detecting/receiving module for detecting and receiving the longitudinal mechanical wave generated from the longitudinal-wave generating module and of the surface wave, so as to read frequency and waveform of the longitudinal mechanical wave and to obtain a communication signal represented by the longitudinal mechanical wave.

20. The method according to claim 19, wherein the step (2) comprises the steps of:

(2-1) detecting and receiving via the longitudinal-wave detecting/receiving module the longitudinal mechanical wave arriving at the mechanical-wave detecting/receiving module, when the mechanical wave generated from the mechanical-wave generating module is transmitted to the mechanical-wave detecting/receiving module;
(2-2) detecting and receiving via the transverse-wave detecting/receiving module the transverse mechanical wave arriving at the mechanical-wave detecting/receiving module after arrival of the longitudinal mechanical wave; and
(2-3) detecting and receiving via the longitudinal-wave and transverse-wave detecting/receiving modules the surface wave arriving at the mechanical-wave detecting/receiving module after arrival of the transverse mechanical wave, wherein the transverse-wave detecting/receiving module detects and receives the transverse mechanical wave of the surface wave, and the longitudinal-wave detecting/receiving module detects and receives the longitudinal mechanical wave of the surface wave.

21. The method according to claim 19, wherein the step (2) comprises the steps of:

(2-1) eliminating noise of the mechanical wave via the mechanical-wave detecting/receiving module, when the mechanical wave generated from the mechanical-wave generating module is transmitted to the mechanical-wave detecting/receiving module;
(2-2) detecting and receiving via the longitudinal-wave detecting/receiving module the longitudinal mechanical wave arriving at the mechanical-wave detecting/receiving module after elimination of the noise;
(2-3) detecting and receiving via the transverse-wave detecting/receiving module the transverse mechanical wave arriving at the mechanical-wave detecting/receiving module after arrival of the longitudinal mechanical wave; and
(2-4) detecting and receiving via the longitudinal-wave and transverse-wave detecting/receiving modules the surface wave arriving at the mechanical-wave detecting/receiving module after arrival of the transverse mechanical wave, wherein the transverse-wave detecting/receiving module detects and receives the transverse mechanical wave of the surface wave, and the longitudinal-wave detecting/receiving module detects and receives the longitudinal mechanical wave of the surface wave.

FIG. 1

mechanical wave
5

mechanical-wave
generating module
2

mechanical
wave
5

medium
4

mechanical-wave
detecting/receiving
module
3

1

FIG. 2

transverse mechanical wave 5

medium 4 (steel strip)

v (wave velocity)

FIG. 3

FIG. 4

mechanical-wave
generating module

2

mechanical-wave
(longitudinal wave) 5

4 medium

mechanical-wave
(longitudinal wave) 5

mechanical-wave
detecting/receiving
module

3

FIG. 5

EP 1 385 283 A1

# FIG. 6

medium 4(granite strip)

longitudinal mechanical wave 5

v (wave velocity)

FIG. 7

# FIG. 8

EP 1 385 283 A1

ground surface

4 (stratum struture)   4 (stratum struture)

2

| mechanical-wave |
| generating |
| module |

21

| transverse-wave |
| generating module |

22

| longitudinal-wave |
| generating module |

5
(P wave)

5    mechanical wave

5
(P wave)   5  (Surface wave)

5

5              5
(S wave)  5  (S wave)

5

3

| mechanical-wave |
| generating module |

31

| transverse-wave |
| detecting/receiving |
| module |

32

| longitudinal-wave |
| detecting/receiving |
| module |

18

FIG. 9

EP 1 385 283 A1

FIG. 10

medium 4 (ground surface)

medium 4
(stratum
structure)

surface wave
(Surface wave of
mechanical wave 5)

# FIG. 11

201 medium tube 3

202 piston

mechanical-wave
detecting/rereceiving
module

5
mechanical wave
(longitudinal wave)

4 medium (liquid)

FIG. 12

2 mechanical-wave generating module

4 medium (gas)

5 mechanical-wave (longitudinal wave)

3 mechanical-wave detecting/receiving module

EP 1 385 283 A1

# FIG. 13

101 ─┐
```
┌─────────────────────────────────────────────┐
│          generating mechanical wave          │
└─────────────────────────────────────────────┘
```

102 ─┐
```
┌─────────────────────────────────────────────┐
│         transmitting mechanical wave         │
└─────────────────────────────────────────────┘
```

103 ─┐
```
┌─────────────────────────────────────────────┐
│  detecting/receiving/reading mechanical wave │
└─────────────────────────────────────────────┘
```

EP 1 385 283 A1

# FIG. 14

111 —
```
generating mechanical wave
```

112 —
```
transmitting mechanical wave
```

113 —
```
detecting/receiving/reading mechanical wave
```

## FIG. 15

EP 1 385 283 A1

121
| generating mechanical wave |
|---|

122
| transmitting mechanical wave |
|---|

123
| detecting/receiving/reading mechanical wave |
|---|

# FIG. 16

131 — generating mechanical wave

132 — transmitting mechanical wave

133 — detecting/receiving/reading mechanical wave

FIG. 17

231 — detecting/receiving noise

232 — detecting/receiving P wave

233 — detecting/receiving/reading S wave

234 — detecting/receiving surface wave

# FIG. 18

141 — generating mechanical wave

142 — transmitting mechanical wave

143 — detecting/receiving/reading mechanical wave

FIG. 19

151 — generating mechanical wave

152 — transmitting mechanical wave

153 — detecting/receiving/reading mechanical wave

EP 1 385 283 A1

<table>
<tr><td colspan="2"></td><td>**European Patent**</td><td rowspan="2">**EUROPEAN SEARCH REPORT**</td><td>Application Number</td></tr>
<tr><td colspan="2"></td><td>**Office**</td><td>EP 02 01 6249</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 29058 A (SONNENSCHEIN ELAZAR ;DIVECOM LTD (IL); WULICH DOV (IL); SONNENSCHE) 10 June 1999 (1999-06-10) \* abstract \* \* page 3, line 7 - line 22 \* \* page 5, line 1 - page 6, line 14 \* \* page 7, line 1 - line 12 \* \* page 8, line 15 - line 21 \* --- | 1-21 | H04B13/00 |
| X | US 5 121 366 A (WAYNER BRIAN D ET AL) 9 June 1992 (1992-06-09) \* abstract \* \* column 2, line 20 - line 47 \* \* column 3, line 12 - line 35 \* \* column 3, line 60 - column 4, line 8 \* \* column 4, line 52 - line 59 \* \* figures 1,2 \* --- | 1-21 | |
| A | US 4 085 400 A (CLUZEL PHILIPPE HENRI MAURICE ET AL) 18 April 1978 (1978-04-18) \* abstract \* \* column 2, line 5 - line 64 \* \* column 3, line 47 - line 54 \* \* column 4, line 5 - line 9 \* \* figure 1 \* ----- | 4-8,16, 17 | TECHNICAL FIELDS SEARCHED (Int.Cl.7) H04B |

The present search report has been drawn up for all claims

| Place of search | Date of completion of the search | Examiner |
|---|---|---|
| THE HAGUE | 3 February 2003 | Reville, L |

**ANNEX TO THE EUROPEAN SEARCH REPORT
ON EUROPEAN PATENT APPLICATION NO.**

EP 02 01 6249

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2003

| Patent document cited in search report | | Publication date | Patent family member(s) | | Publication date |
|---|---|---|---|---|---|
| WO 9929058 | A | 10-06-1999 | IL | 122375 A | 20-05-2001 |
| | | | AU | 8032198 A | 16-06-1999 |
| | | | EP | 1036441 A1 | 20-09-2000 |
| | | | WO | 9929058 A1 | 10-06-1999 |
| | | | US | 6130859 A | 10-10-2000 |
| | | | ZA | 9810874 A | 01-06-1999 |
| US 5121366 | A | 09-06-1992 | AU | 647217 B2 | 17-03-1994 |
| | | | AU | 8896791 A | 25-06-1992 |
| | | | CA | 2054915 A1 | 20-06-1992 |
| | | | JP | 4292026 A | 16-10-1992 |
| US 4085400 | A | 18-04-1978 | FR | 2309105 A1 | 19-11-1976 |
| | | | DE | 2617702 A1 | 04-11-1976 |
| | | | GB | 1518592 A | 19-07-1978 |

EPO FORM P0459

For more details about this annex : see Official Journal of the European Patent Office, No. 12/82